(19) **Europäisches Patentamt**
**European Patent Office**
**Office européen des brevets**

(11) **EP 4 053 193 A1**

(12) **EUROPEAN PATENT APPLICATION**
published in accordance with Art. 153(4) EPC

(43) Date of publication:
**07.09.2022 Bulletin 2022/36**

(21) Application number: **20911174.9**

(22) Date of filing: **10.12.2020**

(51) International Patent Classification (IPC):
***C08J 5/18*** *(2006.01)*      ***C08J 5/04*** *(2006.01)*

(52) Cooperative Patent Classification (CPC):
**C08J 5/04; C08J 5/18**

(86) International application number:
**PCT/KR2020/018014**

(87) International publication number:
**WO 2021/137464 (08.07.2021 Gazette 2021/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2019 KR 20190179683**
**02.12.2020 KR 20200166676**

(71) Applicant: **Kolon Industries, Inc.**
**Seoul 07793 (KR)**

(72) Inventor: **KIM, Sang Hwan**
**Seoul 07793 (KR)**

(74) Representative: **Ter Meer Steinmeister & Partner
Patentanwälte mbB
Nymphenburger Straße 4
80335 München (DE)**

(54) **PREPREG, PREPARATION METHOD THEREOF, AND FIBER REINFORCED COMPOSITE
MATERIAL PREPARED THEREFROM**

(57)    The present disclosure relates to a prepreg, a preparation method thereof and a fiber-reinforced composite material prepared therefrom. The preparation method of a prepreg may include an aramid fiber base material with improved wettability to resin, can increase a thickness reduction rate during molding of the prepreg, has an appropriate resin content, and can provide a prepreg suitable for molding by an out-of-autoclave process. In addition, the prepreg may provide a fiber-reinforced composite material that exhibits a thin thickness and a high resin content even by an out-of-autoclave process, and shows high strength and low moisture absorption rate.

EP 4 053 193 A1

**Description**

[TECHNICAL FIELD]

The present disclosure relates to a prepreg, a preparation method thereof and a fiber-reinforced composite material prepared therefrom.

[BACKGROUND OF ART]

A fiber-reinforced composite material prepared by impregnating a matrix resin in a fiber material for reinforcement, followed by curing has been widely used in various fields such as electronic parts, automobile parts or the like.

Glass fiber or carbon fiber has been mainly used as the fiber material for reinforcement. However, glass fiber has a high specific gravity, thus making it difficult to reduce a weight, and is also harmful to the human body, while carbon fiber has a high specific stiffness and thus has poor machinability and impact resistance.

As an alternative to solve these problems, a technique for using an aramid fiber has been introduced. However, the aramid fiber has poor wettability, and compatibility with the matrix resin compared to the glass fiber or carbon fiber, thus resulting in another problem such as voids occurring after curing into a fiber-reinforced composite material.

[DETAILED DESCRIPTION OF THE INVENTION]

[Technical Problem]

In the present disclosure, there is provided a preparation method of a prepreg.

There are also provided a prepreg prepared from the preparation method of a prepreg and a fiber-reinforced composite material prepared therefrom.

[Technical Solution]

Hereinafter, the preparation method of a prepreg, the prepreg prepared from the preparation method, and the fiber-reinforced composite material prepared from the prepreg according to specific embodiments of the present disclosure will be described.

According to one embodiment, there is provided a preparation method of a prepreg, including:

a first laminating step of laminating a resin film on an aramid fiber base material and applying a pressure; and a second laminating step of applying a pressure to a laminate obtained from the first laminating step,
wherein a lower pressure is applied at a lower temperature in the second laminating step than in the first laminating step.

As a result of studying to improve the wettability of the aramid fiber of the fiber-reinforced composite material to the resin, the present inventors have confirmed that a high-quality fiber-reinforced composite material can be obtained by improving the wettability of the aramid fiber base material to the resin during molding of a prepreg, when preparing the prepreg, which is an intermediate material for preparing the fiber-reinforced composite material, through a first laminating step performed under the conditions of high temperature and high pressure and a second laminating step performed under the conditions of low temperature and medium pressure.

Specifically, the present inventors have developed a preparation method of a prepreg with an appropriate resin content while increasing a thickness reduction rate during molding of the prepreg in consideration of elastic recovery property of the aramid fiber base material, viscosity property and curing property of a resin film, and the like under the conditions for preparing and molding the prepreg.

The first laminating step of the preparation method according to one embodiment may maximize permeability of the resin so that the resin film may penetrate deeply into the aramid fiber base material, and may be performed at a high temperature and under a high pressure so that an appropriate content of the resin may be impregnated into the aramid fiber base material.

Specifically, the first laminating step may be performed at a temperature of 80 °C to 90 °C, 82 °C to 88 °C, or 84 °C to 86 °C. Within the above temperature range, the permeability of the resin may be maximized while the resin film does not harden, and an unimpregnated part may not occur inside the aramid fiber base material, thereby inhibiting the occurrence of problems such as a decrease in strength, and a high moisture absorption rate caused by an unimpregnated area or a dry area occurring during subsequent molding.

In addition, the first laminating step may be performed under a pressure of 2.6 to 5 bar, 2.8 to 4.5 bar, or 3 to 4 bar. As such, when a high pressure is applied to the resin film laminated on both sides of the aramid fiber base material at a high temperature, the viscosity of the resin may be lowered and the resin may easily penetrate between the fibers of the aramid fiber base material, and thus an unimpregnated part may not occur inside the aramid fiber base material, thereby inhibiting the occurrence of problems such as a decrease in strength, and a high moisture absorption rate. In addition, when a pressure is removed after applying a high pressure to the aramid fiber base material, relatively large voids may be formed inside the prepreg by the elastic recovery of the aramid fiber base material. Due to the large voids, the prepreg may have an improved thickness reduction rate during molding.

The second laminating step of the preparation method according to above one embodiment may be performed at a low temperature and under medium pressure in order to improve the resin adhesion, impregnation property and the like near a surface of the aramid fiber base material and to provide an appropriate level of resin content.

Specifically, the second laminating step may be performed at a temperature of 70 °C to 79 °C, 70 °C to 75 °C, or 70 °C to 73 °C. In addition, the second laminating step may be performed under a pressure of 1.5 to 2.5 bar, 1.7 to 2.3 bar, or 1.8 to 2.2 bar. As such, when medium pressure is applied to a laminate at a low temperature, a degree of elastic recovery of the aramid fiber base material and a viscosity of the resin may be controlled to an appropriate level so as to improve adhesion and impregnation with the resin near a surface of the aramid fiber base material and improve surface quality while increasing a resin content in the prepreg.

The preparation method according to one embodiment may be performed as a continuous process. Specifically, the aramid fiber base material and the resin film may be continuously supplied so that the resin film is laminated on both sides of the aramid fiber base material. More specifically, the aramid fiber base material and the resin film may be continuously supplied by a roller and may be laminated through a pressure roller with a heated surface. As one example, the first and second laminating steps may be performed through at least two rollers, in which at least one roller may pressurize a resin film laminated on both sides of the aramid fiber base material under a high pressure (e.g., 2.6 to 5 bar, 2.8 to 4.5 bar, or 3 to 4 bar) in a state where the surface temperature is heated to a high temperature (e.g., 80 °C to 90 °C, 82 °C to 88 °C, or 84 °C to 86 °C), and at least another roller may pressurize a laminate under a medium pressure (e.g., 1.5 to 2.5 bar, 1.7 to 2.3 bar, or 1.8 to 2.2 bar) in a state where the surface temperature is heated to a low temperature (e.g., 70 °C to 79 °C, 70 °C to 75 °C, or 70 °C to 73 °C).

At this time, the resin film may be sufficiently impregnated down to the center of the aramid fiber base material by adjusting a feed rate in the first laminating step to 0.1 to 1.5 m/min, 0.1 to 1.0 m/min, or 0.1 to 0.8 m/min.

In the second laminating step, the feed rate of the laminate may be adjusted to be the same as in the first laminating step in that the second laminating step may be performed as a continuous process with the first laminating step.

The aramid fiber base material that can be used in the preparation method according to one embodiment may be a fabric woven with aramid fibers. In this case, a prepreg with excellent mechanical properties may be prepared by maximizing the impregnation property of the resin using a fiber of 1500 to 3500 denier as the aramid fiber.

In the preparation method according to one embodiment, it is possible to prevent the resin film from being cured in the first and second laminating steps by using a resin film cured at a temperature of about 90 °C to 130 °C.

In addition, it is possible to improve the impregnation property of the resin film to the aramid fiber base material by using a resin film having an absolute viscosity of about 5 to 10 Pa·s at about 70 °C.

The absolute viscosity may be a viscosity value measured at about 70 °C by using a rotational rheometer after preparing a specimen having a diameter of about 300 mm and a thickness of about 300 $\mu$m.

Such resin film may include a thermoplastic resin, a thermosetting resin, or a mixture thereof.

For example, the resin film may be formed from a thermosetting resin composition. A main resin of the thermosetting resin composition may be at least one selected from the group consisting of epoxy resin, phenol resin, unsaturated polyester resin, cyanate ester resin, and the like.

Out of them, the resin film may be formed from a thermosetting resin composition including epoxy resin.

The epoxy resin included in the thermosetting resin composition may mean a material having two or more epoxy groups in a molecule or a resin produced by polymerization of the material. As the epoxy resin, for example, at least one selected from the group consisting of bisphenol type epoxy resin such as bisphenol A type epoxy resin, bisphenol F type epoxy resin, bisphenol AD type epoxy resin, and bisphenol S type epoxy resin; brominated epoxy resin such as tetrabromobisphenol A diglycidyl ether; epoxy resin having a biphenyl skeleton; epoxy resin having a naphthalene skeleton; epoxy resin having a dicyclopentadiene skeleton; novolac type epoxy resin such as phenol novolac type epoxy resin and cresol novolac type epoxy resin; and glycidylamine type epoxy resin such as diaminodiphenylmethane type epoxy resin, diaminodiphenylsulfone type epoxy resin, aminophenol type epoxy resin, metaxylene diamine type epoxy resin, 1,3-bisaminomethyl cyclohexane type epoxy resin and isocyanurate type epoxy resin may be used.

In addition, the thermosetting resin composition may include a curing agent for curing the epoxy resin. A compound having an active group capable of cross-linking with an epoxy group may be used as the curing agent. Examples of the curing agent may include dicyandiamide, diaminodiphenylmethane, diaminodiphenylsulfone, aminobenzoic acid esters, various acid anhydrides, phenol novolac resin, cresol novolac resin, polyphenol compound, imidazole derivative, aliphatic amine, tetramethylguanidine, thiourea-amine, methyl hexahydrophthalic anhydride, other carboxylic acid anhydrides, carboxylic acid hydrazide, carboxylic acid amide, polymercaptan, boron trifluoride ethylamine complex, other Lewis acid complexes, etc.

The curing agent may be used in an amount of about 3 to 10 parts by weight based on 100 parts by weight of the epoxy resin so as to properly cure the epoxy resin without a residual curing agent.

The thermosetting resin composition may further include a thermoplastic resin, if necessary. For example, the thermoplastic resin may be at least one selected from the group consisting of polyamide, polycarbonate, polyacetal, polyphenylene oxide, polyphenylene sulfide, polyarylate, polyester, polyamideimide, polyimide, polyetherimide, polyimide having a phenyl trimethyl indane structure, polysulfone, polyethersulfone, polyetherketone, polyetheretherketone, polyaramid, polyethernitrile and polybenzimidazole.

The thermoplastic resin may be added in the form of particles or fibers. When added in the form of particles, a shape thereof may be a spherical, non-spherical, porous, whisker, or flake shape, and when added in the form of fibers, the thermoplastic resin may be added in a state of short fibers or long fibers.

The thermosetting resin composition may further include various additives known in the art to which the present disclosure pertains in addition to the above-described configuration, for example, a curing aid, etc.

Meanwhile, according to another embodiment of the present disclosure, there is provided a prepreg prepared according to the preparation method. The prepreg prepared according to the preparation method may include an aramid fiber base material and a resin impregnated in the aramid fiber base material. Since the aramid fiber base material and the resin have been described in detail above, a detailed description thereof will be omitted.

In particular, the prepreg is prepared through a two-step laminating process under specific conditions and impregnated with a resin down to a center of the prepreg, and thus may be provided with a minimized unimpregnated area. In addition, it may also have a relatively large void, thereby showing an appropriate resin content while exhibiting a large thickness reduction rate during molding into a fiber-reinforced composite material.

Specifically, the prepreg may have a high resin content of 35 to 45 wt%, 37 to 43 wt%, or 39 to 41 wt%.

In addition, the prepreg may provide a fiber-reinforced composite material by an out-of-autoclave process using only a vacuum pump and an oven without using an autoclave, which is an expensive pressurization facility.

Although the existing out-of-autoclave process has an advantage of not using expensive pressurization equipment, the method has a disadvantage of a high defect rate due to the formation of voids by volatile ingredients of the resin film.

However, the prepreg prepared according to the preparation method of one embodiment may provide a high-quality fiber-reinforced composite material even by the out-of-autoclave process.

Meanwhile, according to another embodiment of the present disclosure, there is provided a fiber-reinforced composite material prepared from the prepreg. The fiber-reinforced composite material may include an aramid fiber base material and a resin cured in a state of being impregnated in the aramid fiber base material. Since the aramid fiber base material and the resin have been described in detail above, a detailed description thereof will be omitted.

The fiber-reinforced composite material may be prepared from one or more prepregs, or a laminate in which two or more prepregs are laminated.

The fiber-reinforced composite material is prepared from the prepreg prepared through a two-step laminating process under specific conditions described above, so as to minimize an unimpregnated area or a dry area, thereby showing excellent strength, a low moisture absorption rate, and the like.

Specifically, the fiber-reinforced composite material may have a flexural strength of 250 to 400 MPa, 270 to 350 MPa, or 300 to 330 MPa as measured according to ASTM D790.

In addition, the fiber-reinforced composite material may have a moisture absorption rate of 0 wt% or more, and 3 wt% or less, 2 wt% or less, or 1.7 wt% or less, as calculated by the following Equation 1.

[Equation 1]

Moisture absorption rate = (Weight of sample after immersion - Weight of sample before immersion) / Weight of sample before immersion * 100

in the Equation 1, the weight of a sample before immersion is a weight before immersing the sample in distilled water, and the weight of a sample after immersion is a weight of the sample measured after being completely immersed in distilled water and taken out, wherein the weight is a value measured after primarily removing moisture from upper and lower portions and an edge of the sample with towel and secondarily removing moisture from the upper and lower portions with dry towel.

For details on the method of measuring the flexural strength and moisture absorption rate, refer to the contents described in Test Examples to be described later.

The fiber-reinforced composite material may exhibit the above-described excellent flexural strength and low moisture absorption rate even when molded by an out-of-autoclave process.

In addition, the fiber-reinforced composite material may show a high resin content of 35 to 45 wt%, 35 to 40 wt%, 36 to 38 wt%, or 37 to 38 wt%.

[ADVANTAGEOUS EFFECTS]

A preparation method of a prepreg according to one embodiment of the present disclosure may include an aramid fiber base material with improved wettability to resin, can increase a thickness reduction rate during molding of the prepreg, has an appropriate resin content, and can provide a prepreg suitable for molding by an out-of-autoclave process. In addition, the prepreg may provide a fiber-reinforced composite material that exhibits a thin thickness and a high resin content even by an out-of-autoclave process, and shows high strength and low moisture absorption rate.

[DETAILED DESCRIPTION OF THE EMBODIMENTS]

Hereinafter, the function and effect of the present invention will be described in more detail with specific examples. However, these examples are for illustrative purposes only, and the invention is not intended to be limited by these examples.

Example 1: Preparation of prepreg

A plain-woven aramid fabric was woven using aramid yarn having about 3000 denier as warp and weft yarns.

Meanwhile, an epoxy resin film prepared by applying an epoxy resin composition available as SCP-510 from EZ Composite to a release paper in an application amount of about $80 \pm 10$ g/m$^2$, followed by drying was used as the resin film.

While continuously supplying the aramid fabric, the epoxy resin film was continuously supplied so as to come into a contact with both sides of the aramid fabric. A feed rate of the aramid fabric and the resin film was controlled to about 0.5 m/min.

Then, a first laminating step was performed by applying a pressure of 3 bar to a resin film laminated on both sides of the aramid fabric with a pressure roller heated to 85 °C. After that, a prepreg was prepared by impregnating the resin film in both sides of the aramid fabric through a second laminating step of applying a pressure of 2 bar to a laminate obtained in the first laminating step with a pressure roller heated again to 70 °C.

Comparative Example 1: Preparation of prepreg

A prepreg was prepared in the same manner as in Example 1, except for performing a first laminating step of applying a pressure to the resin film laminated on both sides of the aramid fabric with a pressure roller heated to 85 °C; a second laminating step of applying a pressure to the resin film laminated on both sides of the aramid fabric with a pressure roller heated to 70 °C; and a third laminating step of applying a pressure to the resin film laminated on both sides of the aramid fabric with a pressure roller heated to 100 °C instead of the first and second laminating steps.

Test Examples: Evaluation of physical properties of prepreg

The physical properties of the prepregs prepared in Examples and Comparative Examples were evaluated by the method described below, and the results thereof are shown in table 1.

1) Resin content before molding

A percentage of mass per unit of a resin film to mass per unit of a prepreg ((Mass per unit of prepreg - Mass per unit of aramid fabric)/Mass per unit of prepreg * 100) was measured and defined as a resin content (unit: wt%).

2) Thickness after molding, rate of change in thickness and resin content

Four prepregs were laminated in four layers and then sufficiently compressed with a roller. Then, the laminate was placed on a release-treated flat mold, and a release film was laminated. And, a breather serving as an air flow path inside a vacuum bag was laminated on the release film with or without the lamination of a caul plate (steel) having the same size as that of the prepreg having a thickness of 2 mm, and finally wrapped with the vacuum bag, followed by sealing with sealant. Then, a fiber-reinforced composite material was prepared by curing the prepreg while maintaining at 125 °C for 30 minutes under a vacuum pressure of 28 inchHg.

A thickness, a rate of change in thickness, and a resin content were measured, respectively for the fiber-reinforced composite material prepared by using the caul plate and the fiber-reinforced composite material prepared without the caul plate.

The thickness was measured by measuring a thickness at eight points of total four corners with two points for each corner of a sample, and then obtaining an average value thereof, the rate of change in thickness was calculated from a percentage of difference in thickness before and after molding to a thickness before molding (Difference in thickness before and after molding/Thickness before molding*100), and the resin content was measured by the method described above.

3) Flexural strength

A flexural strength of the fiber-reinforced composite material prepared by using the caul plate and the fiber-reinforced composite material prepared without the caul plate was measured with a universal tensile tester at a temperature of 23 ± 2 °C according to ASTM D790.

4) Moisture absorption rate

A moisture absorption rate of the fiber-reinforced composite material prepared by using the caul plate and the fiber-reinforced composite material prepared without the caul plate was measured by completely immersing a sample in distilled water. Then, the moisture absorption rate was calculated by substituting a weight before immersion and a weight after immersion in the following Equation 1.

[Equation 1]

$$\text{Moisture absorption rate (wt\%)} = \frac{(\text{Weight of sample after immersion} - \text{Weight of sample before immersion})}{\text{Weight of sample before immersion}} * 100$$

At this time, the weight before and after immersion was measured after primarily removing moisture from upper and lower portions and an edge of the sample with towel (five sheets of Kimwipes, dry fabric, etc.) and secondarily removing moisture from the upper and lower portions again with dry towel to completely remove the moisture visually.

[Table 1]

|  |  | Example 1 | Comparative Example 1 |
|---|---|---|---|
| Resin content before molding |  | 39.78 wt% | 40.44 wt% |
| Caul Plate unused | Thickness | 2.49 mm | 2.49 mm |
|  | Rate of change in thickness | 2.46 % | Unmeasured |
|  | Resin content after molding | 37.71 wt% | 38.85 wt% |
|  | Flexural strength | 321.31 MPa | 232.54 MPa |
|  | Moisture absorption rate | 1.637 wt% | 3.461 wt% |
| Caul Plate used | Thickness | 2.37 mm | 2.32 mm |
|  | Rate of change in thickness | 13.10 % | 2.52 % |
|  | Resin content after molding | 37.22 wt% | 36.48 wt% |
|  | Flexural strength | 308.86 MPa | 199.01 MPa |
|  | Moisture absorption rate | 1.581 wt% | 4.102 wt% |

**Claims**

1. A preparation method of a prepreg, comprising:

   a first laminating step of laminating a resin film on an aramid fiber base material and applying a pressure; and
   a second laminating step of applying a pressure to a laminate obtained from the first laminating step,
   wherein a lower pressure is applied at a lower temperature in the second laminating step than in the first laminating step.

2. The preparation method of a prepreg of claim 1, wherein the first laminating step is performed at a temperature of 80 °C to 90 °C.

3. The preparation method of a prepreg of claim 1, wherein the first laminating step is to laminate a resin film on an aramid fiber base material and apply a pressure of 2.6 to 5 bar.

4. The preparation method of a prepreg of claim 1, wherein the second laminating step is performed at a temperature of 70 °C to 79 °C.

5. The preparation method of a prepreg of claim 1, wherein the second laminating step is to apply a pressure of 1.5 to 2.5 bar to a laminate obtained from the first laminating step.

6. The preparation method of a prepreg of claim 1, wherein the first laminating step is to continuously supply the aramid fiber base material and the resin film at a feed rate of 0.1 to 1.5 m/min so that the resin film is laminated on both sides of the aramid fiber base material.

7. The preparation method of a prepreg of claim 1, wherein the aramid fiber base material is woven with aramid fibers of 1500 to 3500 deniers.

8. The preparation method of a prepreg of claim 1, wherein the resin film is cured at 90 °C to 130 °C.

9. The preparation method of a prepreg of claim 1, wherein the resin film has an absolute viscosity of 5 to 10 Pa·s at 70 °C.

10. The preparation method of a prepreg of claim 1, wherein the resin film is formed from a thermosetting resin composition comprising an epoxy resin and a curing agent.

11. The preparation method of a prepreg of claim 10, wherein the epoxy resin comprises at least one selected from the group consisting of bisphenol A type epoxy resin, bisphenol F type epoxy resin, bisphenol AD type epoxy resin, bisphenol S type epoxy resin, tetrabromobisphenol A diglycidyl ether, epoxy resin having a biphenyl skeleton, epoxy resin having a naphthalene skeleton, epoxy resin having a dicyclopentadiene skeleton, phenol novolac type epoxy resin, cresol novolac type epoxy resin, diaminodiphenylmethane type epoxy resin, diaminodiphenylsulfone type epoxy resin, aminophenol type epoxy resin, metaxylene diamine type epoxy resin, 1,3-bisaminomethyl cyclohexane type epoxy resin and isocyanurate type epoxy resin.

12. A prepreg prepared from the preparation method of a prepreg of claim 1.

13. The prepreg of claim 12, which has a resin content of 35 to 45 wt%.

14. A fiber-reinforced composite material, comprising an aramid fiber base material and a resin cured in a state of being impregnated in the aramid fiber base material, wherein a flexural strength measured according to ASTM D790 is 250 to 400 MPa.

15. The fiber-reinforced composite material of claim 14, wherein a moisture absorption rate calculated by the following Equation 1 is 0 to 3 wt%:

[Equation 1]

Moisture absorption rate = (Weight of sample after immersion - Weight of sample before immersion) / Weight of sample before immersion * 100

in the Equation 1, the weight of a sample before immersion is a weight before immersing the sample in distilled water, and the weight of a sample after immersion is a weight of the sample measured after being completely immersed in distilled water and taken out, wherein the weight is a value measured after primarily removing moisture from upper and lower portions and an edge of the sample with towel and secondarily removing moisture from the upper and lower portions with dry towel.

## INTERNATIONAL SEARCH REPORT

| International application No. |
| --- |
| **PCT/KR2020/018014** |

**A. CLASSIFICATION OF SUBJECT MATTER**

**C08J 5/18**(2006.01)i; **C08J 5/04**(2006.01)i

According to International Patent Classification (IPC) or to both national classification and IPC

**B. FIELDS SEARCHED**

Minimum documentation searched (classification system followed by classification symbols)

C08J 5/18(2006.01); B29C 70/10(2006.01); B29C 70/22(2006.01); B29C 70/34(2006.01); C08J 5/04(2006.01); C08J 5/24(2006.01); C08L 63/00(2006.01); C08L 77/10(2006.01); C08L 79/04(2006.01); D21H 13/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프리프레그(prepreg), 아라미드 섬유(aramid fiber), 수지 필름(resin film), 압력 (pressure), 라미네이팅(laminating), 함침(impregnation), 굽힘 강도(flexural strength)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2016-117857 A (SANYU REC CO., LTD.) 30 June 2016 (2016-06-30)<br>See paragraph [0051]; and claims 1 and 3-8. | 1-13 |
| Y | KR 10-2015-0095947 A (MITSUBISHI RAYON CO., LTD.) 21 August 2015 (2015-08-21)<br>See paragraphs [0128] and [0131]-[0160]; and figures 1 and 2. | 1-13 |
| X | CN 109486185 A (SUZHOU UNIVERSITY) 19 March 2019 (2019-03-19)<br>See abstract; paragraph [0028]; and claim 1. | 14,15 |
| X | CN 109593357 A (SUZHOU UNIVERSITY) 09 April 2019 (2019-04-09)<br>See abstract; paragraph [0023]; and claim 1. | 14 |
| A | JP 11-131385 A (OJI PAPER CO., LTD.) 18 May 1999 (1999-05-18)<br>See claims 1-3 and 7-11. | 1-15 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 April 2021** | **02 April 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2020/018014**

**C.    DOCUMENTS CONSIDERED TO BE RELEVANT**

| Category* | Citation of document, with indication, where appropriate, of the relevant passages | Relevant to claim No. |
|-----------|------------------------------------------------------------------------------------|-----------------------|
| A | KR 10-2019-0037124 A (KOLON INDUSTRIES, INC.) 05 April 2019 (2019-04-05)<br>See entire document. | 1-15 |

Form PCT/ISA/210 (second sheet) (July 2019)

**INTERNATIONAL SEARCH REPORT**
**Information on patent family members**

International application No.

**PCT/KR2020/018014**

| Patent document cited in search report | | | Publication date (day/month/year) | Patent family member(s) | | | Publication date (day/month/year) |
|---|---|---|---|---|---|---|---|
| JP | 2016-117857 | A | 30 June 2016 | None | | | |
| KR | 10-2015-0095947 | A | 21 August 2015 | BR | 112013022040 | A2 | 29 November 2016 |
| | | | | BR | 112013022040 | B1 | 01 December 2020 |
| | | | | CN | 103429658 | A | 04 December 2013 |
| | | | | CN | 103429658 | B | 06 January 2016 |
| | | | | DK | 2682429 | T3 | 27 May 2019 |
| | | | | EP | 2682429 | A1 | 08 January 2014 |
| | | | | EP | 2682429 | B1 | 24 April 2019 |
| | | | | ES | 2725555 | T3 | 24 September 2019 |
| | | | | JP | 5985391 | B2 | 06 September 2016 |
| | | | | KR | 10-1775756 | B1 | 06 September 2017 |
| | | | | KR | 10-1823741 | B1 | 30 January 2018 |
| | | | | KR | 10-2013-0129268 | A | 27 November 2013 |
| | | | | KR | 10-2015-0095948 | A | 21 August 2015 |
| | | | | TW | 201245300 | A | 16 November 2012 |
| | | | | TW | I458766 | B | 01 November 2014 |
| | | | | US | 2013-0327479 | A1 | 12 December 2013 |
| | | | | US | 9481789 | B2 | 01 November 2016 |
| | | | | WO | 2012-118208 | A1 | 07 September 2012 |
| CN | 109486185 | A | 19 March 2019 | None | | | |
| CN | 109593357 | A | 09 April 2019 | None | | | |
| JP | 11-131385 | A | 18 May 1999 | DE | 69825012 | T2 | 25 August 2005 |
| | | | | EP | 0915125 | A2 | 12 May 1999 |
| | | | | EP | 0915125 | A3 | 29 December 1999 |
| | | | | EP | 0915125 | B1 | 14 July 2004 |
| | | | | US | 6261414 | B1 | 17 July 2001 |
| KR | 10-2019-0037124 | A | 05 April 2019 | CN | 111183019 | A | 19 May 2020 |
| | | | | EP | 3647025 | A2 | 06 May 2020 |
| | | | | JP | 2020-531707 | A | 05 November 2020 |
| | | | | US | 2020-0216628 | A1 | 09 July 2020 |
| | | | | WO | 2019-066374 | A2 | 04 April 2019 |
| | | | | WO | 2019-066374 | A3 | 23 May 2019 |

Form PCT/ISA/210 (patent family annex) (July 2019)